# EUROPEAN PATENT SPECIFICATION

(11) **EP 3 670 397 B1**
(45) Date of publication and mention of the grant of the patent: **10.09.2025**
(21) Application number: 19218557.7
(22) Date of filing: 20.12.2019
(51) Int. Cl.: B65G 21/22

(54) **CHAIN GUIDE FOR CUP CONVEYOR**
KETTENFÜHRUNG FÜR BECHERFÖRDERER
GUIDE CHAÎNE POUR CONVOYEUR À GODETS

(30) Priority: 20.12.2018 IT 201800020248
(43) Date of publication of application: 24.06.2020
(73) Proprietor: Cusinato Giovanni S.r.l. Soc. Unipersonale, 35018 San Martino di Lupari, Padova (IT)
(72) Inventor: CUSINATO, Vanni, I-35018 San Martino di Lupari, PADOVA (IT)
(74) Representative: Busana, Omar

(56) References cited:
- EP-A1- 2 907 774
- WO-A1-2010/146098
- DE-A1- 1 950 151
- FR-A1- 2 848 539
- FR-A7- 2 120 288

## Description

### FIELD OF APPLICATION

The present invention relates to a chain guide for a cup conveyor.

### PRIOR ART

FR 2 848 539 A1 discloses a chain guide according to the preamble of claim 1.

As is known, cup conveyors are generally used for the transport of fragile or delicate granular products such as: pasta, legumes, dried fruit, candy, frozen foods, animal feed, granular products in general and chemicals.

Cup conveyors comprise a plurality of cups close to each other, which move along a predetermined path. At one or more stations they are fed with a product, and at one or more stations they unload the product. Generally, the product is unloaded by rotating the cup.

The predetermined path may also include sections in which it is necessary to lift the cups, in which case the cup conveyors are called cup elevators.

Conveyor chains closed in a ring to which opposite ends of the cups are connected are generally used to move the cups.

The chain is supported by chain guides which comprise two sliding surfaces, opposite each other, which mate with the chain bushings, so that between the bushings and the sliding surfaces there is as little clearance as possible. The chain guides are placed on the sides of the cups, and extend parallel to the direction of movement of the cups and therefore of the chains.

Since it is an element exposed to wear due to the sliding of the chain, the chain guide generally consists of a support of metal material and of an element of replaceable polymeric material, on which the chain actually slides.

Generally, the support of metal material is an element with a C-shaped cross section, inside which a sliding element of polymeric material also with a C-shaped cross section is arranged. The coupling between these two elements is generally obtained by means of a shape coupling, inserting the element of polymeric material longitudinally inside the support. The two elements are C-shaped so that one of the two lateral surfaces of the chain is partially free to allow connection with the cups.

This type of chain guide, although widely appreciated, is not without drawbacks.

First of all, the chain guide is a component that in some applications, for example in the food industry, must be cyclically cleaned or washed, in order to eliminate accumulations of dust and lubricant that could settle therein. The washing of the surfaces that are in contact with the bushes of the chain is an easily achievable operation since it deals with easily accessible surfaces. Instead, the innermost surfaces of the sliding element are more difficult to clean, and a part of dirt remains trapped therein.

Furthermore, the part of the chain guide subjected to wear essentially concerns the tracks on which the bushes of the chain slide, and not the other inner surfaces of the C-shaped sliding element. Therefore, every time the sliding element is replaced, this concerns the complete element, with an evident waste of material which has not been subjected to wear.

The prior art has tried to remedy these two main drawbacks by proposing numerous solutions, which however do not allow solving these drawbacks in an advantageous way, and in particular do not allow solving them simultaneously.

For example, chain guides are known comprising two separate profiles, an upper profile and a lower profile which, at a predetermined pitch, are connected to each other by connecting beams. The two profiles are entirely made of polymeric material, like the connecting beams.

This solution, although it allows a better cleaning of the surfaces, does not allow wasting less polymeric material when it is necessary to replace the parts subjected to wear.

In addition to these drawbacks, there is a general instability of the chain guide due to the fact that also the connection support with the conveyor structure, the connection crosspieces, are made of polymeric material, generally not suitable for the specific application, obtained by hot moulding.

Furthermore, especially in the case in which the cups are intended to contain heavy loads, profiles and connection crosspieces can wear out prematurely, bend or deform, compromising the general stability of the chain guide.

Chain guides without a metal support structure are also known, consisting of a single C-shaped polymeric material element, which can be fixed directly to the conveyor structure.

It is clear that this chain guide is also affected by the problems mentioned above. In addition, the replacement of the chain guide involves much more polymeric material than in the previous case, constituting a further increase in the costs for its replacement.

Furthermore, to improve the stability of these chain guides, one is forced to use very complex polymers, the costs of which further aggravate the cost of initial installation and maintenance of the chain guide.

### DISCLOSURE OF THE INVENTION

The need of solving the drawbacks and limitations mentioned with reference to the prior art is therefore felt.

Therefore, the need is felt to provide a chain guide that allows more efficient cleaning.

Furthermore, the need is felt for a chain guide in which the replacement of the worn part is a less expensive activity with respect to the chain guides of the prior art.

Furthermore, the need is felt for a chain guide which allows a more efficient cleaning than the chain guides of the prior art, together with a lower cost linked to the wear of the parts in contact with the chain.

In addition, there is a need for a chain guide which, together with the requirements just indicated, also allows a stable and long-lasting positioning on the conveyor structure.

These needs are met by a chain guide according to claim 1, and by a cup conveyor comprising a chain guide according to claim 14.

### DESCRIPTION OF THE DRAWINGS

Further features and advantages of the present invention will appear more clearly from the following description of preferred non-limiting embodiments thereof, in which:
- figure 1 schematically shows a perspective view of a chain guide according to the present invention;
- figure 2 shows a schematic perspective view of the chain guide of figure 1, according to a different point of view;
- figure 3 schematically shows a perspective view of a chain guide with a section of chain inserted;
- figure 4 schematically shows a transverse view of a chain guide according to the present invention with the chain inserted;
- figure 5 schematically shows a perspective view of a further embodiment of a chain guide according to the present invention;
- figure 6 schematically shows a partially disassembled perspective view of the chain guide of figure 5;
- figure 7 schematically shows a perspective view of the chain guide of figures 5 and 6 with a portion of chain inserted;
- figure 8 schematically shows a transverse view of the chain guide of figure 7 with a portion of chain inserted;
- figure 9 and figure 10 schematically show transverse views of alternative embodiments of a chain guide according to the present invention, with a portion of chain inserted; and

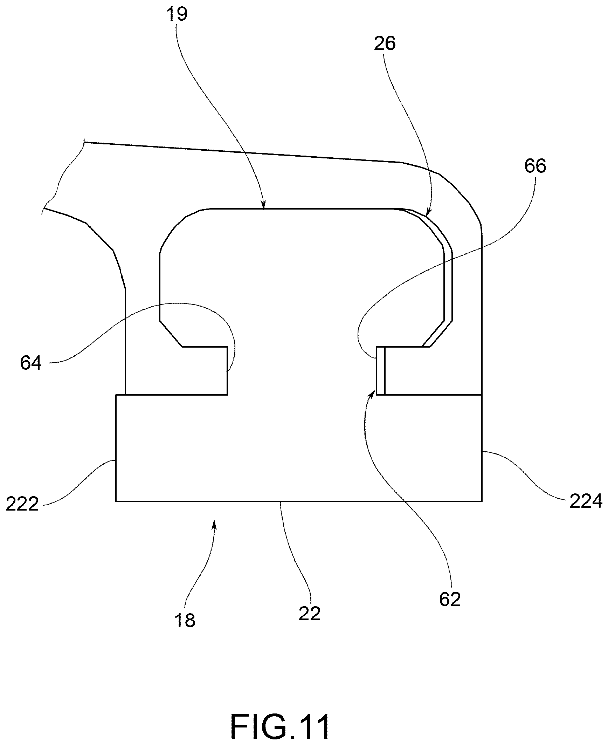

- figure 11 schematically shows a transverse view of a detail of a chain guide according to the present invention.

Elements or parts of elements in common to the embodiments described below are referred to with the same reference numerals.

### DETAILED DESCRIPTION

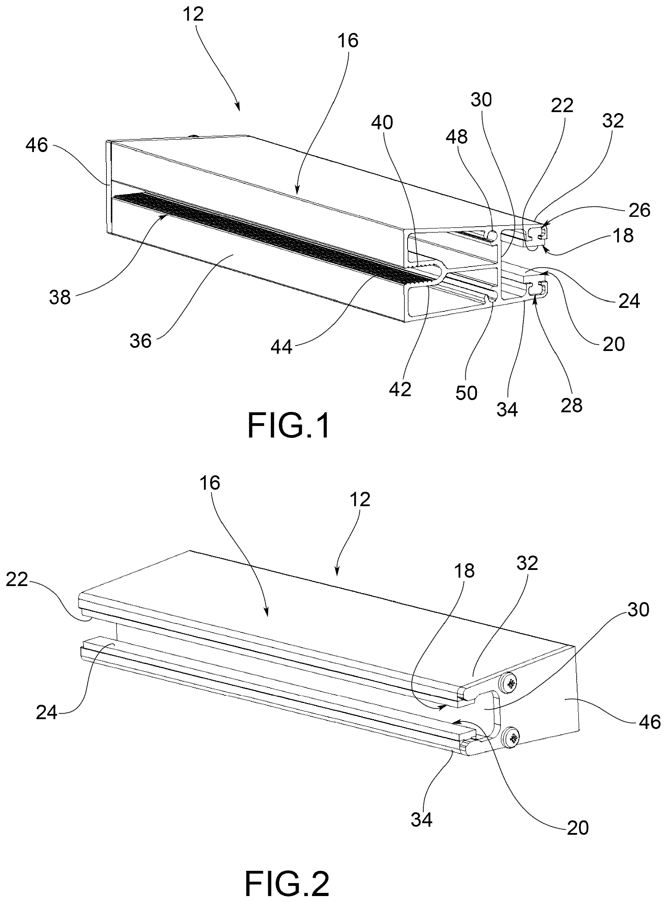

In figure 1, a chain guide for a chain according to the present invention is shown which is indicated as a whole with the reference numeral 12.

The chain guide 12 comprises a support structure 16, a first sliding element 18 and a second sliding element 20.

The first and second sliding elements 18, 20 each comprise at least one sliding surface 22, 24, which face each other, preferably parallel to each other.

The support structure 16 comprises a first seat 26 for the first sliding element 18 and a second seat 28 for the second sliding element 20. The first and the second seat 26, 28 are suitable to establish a shaped coupling with a coupling portion 19, 21 of the first and of the second sliding element 18, 20, respectively. The shaped coupling is adapted to prevent relative movement in directions on a transverse plane to said chain guide 12 between the first and the second seat 26, 28 and the respective first and second elements 18, 20.

In this description, the term longitudinal indicates a direction substantially parallel to the sliding direction defined by the chain guide, and transverse direction indicates a direction substantially perpendicular to the longitudinal one. Likewise, a transverse plane will indicate a plane having a position substantially perpendicular to the longitudinal direction.

According to a first embodiment shown in figures 1-4, the support structure 16 may be made by means of an element having a substantially C-shaped cross section.

The support structure 16 may be a metal profile having a box-type transverse cross-section, from which, at one side 30, two wings 32, 34 protrude on which the first seat 26 and the second seat 28 are provided.

According to alternative embodiments, the support structure could be made in a different way, for example with a C-shaped element, or with a substantially solid element comprising two wings in a similar way as described for the box-type element.

The support structure 16 may comprise a fastening side 36, opposite the side from which the wings 32, 34 protrude. On the fastening side 36 fastening means 38 to a cup conveyor structure may be provided.

In a possible embodiment, the fastening means may be a fastening groove 38, having a substantially longitudinal extension. The fastening groove 38 may comprise inner walls 40, 42 comprising at least one prominence 44, protruding towards the inside of the fastening groove 38 and having longitudinal extension.

Advantageously, the box-type structure arranged with the wings 32, 34 and the fastening groove 38 can be made directly by extrusion.

According to a possible embodiment, the support structure may be made of aluminium or an aluminium alloy.

The fastening groove 38 may be coupled with at least one fastening screw (not shown) for locking the chain guide 12 to the structure of the cup conveyor. Although the fastening groove 38 is provided with two opposite walls, the screw provided with its own thread can engage the at least one prominence arranged on the inner walls 40, 42 of the fastening groove 38 to carry out such a locking.

According to a possible embodiment of the present invention, the fastening groove 38, in the vicinity of the surface of the fastening side 36, may have a width of between 5 mm and 6.5 mm, preferably around 6.5 mm. The fastening screw may be, for example, a self-threading screw. The self-threading screw may have a diameter of 6.3 mm, or preferably 8 mm.

According to a possible embodiment, the chain guide 12 may comprise at least one lateral cap 46 adapted to prevent the axial sliding of the sliding element 18, 20 with respect to the seat 26, 28. The lateral cap 46 may be made by means of a shaped sheet fixed to the support structure 16 according to a substantially transverse position.

According to a possible embodiment shown for example in figure 1, the support structure 16 may be provided with at least one fastening seat 48, 50 inside which a screw can be screwed to lock the lateral cap 46 in position. The fastening seat 48, 50 may be, for example, a cylindrical hole having a substantially longitudinal extension axis.

In the embodiment of figure 1, the fastening seat 48, 50 may be made by means of a substantially cylindrical surface portion having a substantially longitudinal extension. In this way, the screwing of a fastening screw (not shown) will induce a local deformation of the substantially cylindrical surface portion, such as to lock the screw and therefore the lateral cap 46 in position, as shown for example in figure 2.

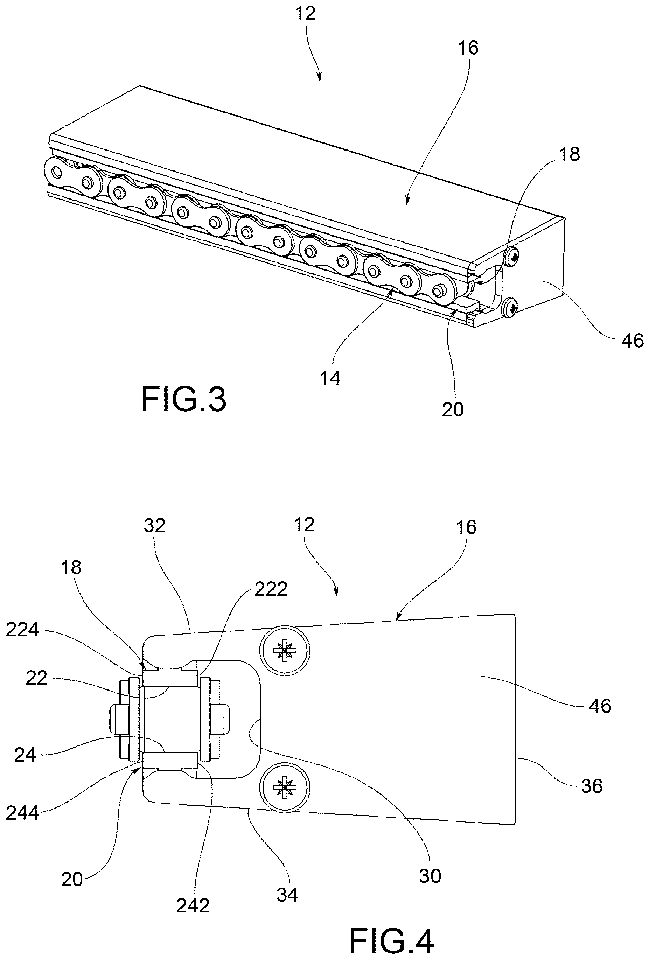

As can be seen in the example of figures 3 and 4, the lateral cap blocks the movement in the longitudinal direction of the sliding element 18, 20 towards the lateral cap, extending parallel and at least partially at the shape coupling between the support structure 16 and the sliding element 18, 20.

According to an alternative embodiment, the lateral cap 46 may be locked in position for example by means of a joint.

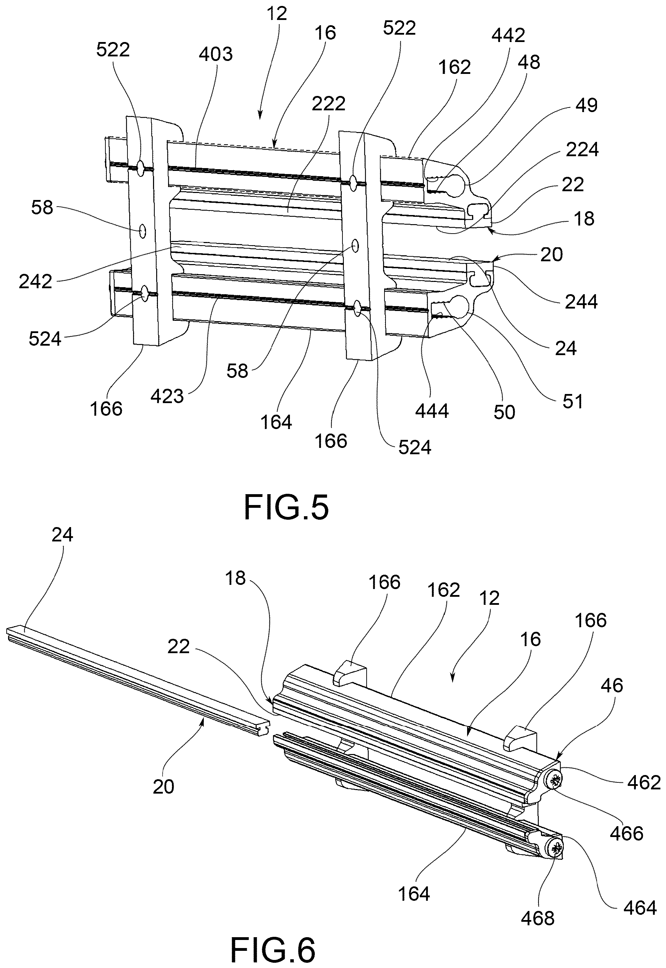

Figures 5-8 show an alternative embodiment of the support structure 16. The support structure 16 may comprise a first support 162 and a second support 164 and at least one connection element 166. Advantageously, the first seat 26 for the first sliding element 18 is arranged on the first support 162, while the second seat 28 for the second sliding element 20 is arranged on the second support 164.

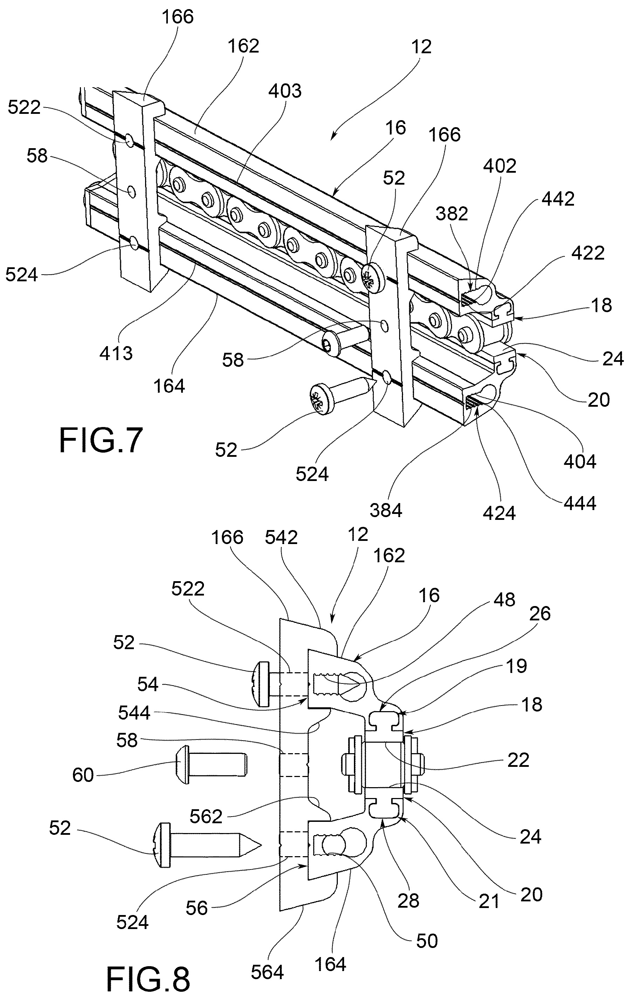

As can be seen in the schematic representation of figure 8, the first support 162 and the second support 164 may be symmetrical to each other. In particular, the first support 162 and the second support 164 may be obtained as pieces of the same section. Advantageously, the first support 162 and the second support 164 may be alike.

With reference to figures 5 and 7, the first and second supports 162, 164 may be arranged with connection means with the connection element 166. The connection means may comprise connection grooves 382, 384 having a substantially longitudinal extension. The connection grooves 382, 384 are quite similar to the fastening groove 38 of the embodiment shown in figures 1-4 and described above.

In particular, the connection grooves 382, 384 may comprise inner walls 402, 422; 404, 424 comprising at least one prominence 442, 444, protruding towards the inside of the connection groove 382, 384.

According to a possible embodiment, the connection means may comprise a guide incision 403, 423 having a substantially longitudinal extension, arranged at the surface of the first and second supports 162, 164 which is coupled with the connection element 166. This guide incision 403, 423 allows facilitating the positioning of the screw 52 during the fastening of the connection element 166 to the first and second support 162, 164.

Advantageously, the first support 162 and the second support 164 with the respective connection means may be made directly by extrusion.

According to a possible embodiment, the first support 162 and the second support 164 may be made of aluminium or an aluminium alloy.

The connection grooves 382, 384 may be coupled with at least one connection screw 52 for locking the first support 162 and the second support 164 to the at least one connection element 166.

In this regard, the connection element 166 may be provided with holes 522, 524 suitable for the passage of at least one connection screw 52.

Although the connection groove 382, 384 is provided with two opposite walls, the connection screw 52 provided with its own thread can engage at least one prominence arranged on the inner walls of the connection groove 382, 384 to carry out such a locking.

According to a possible embodiment of the present invention, the connection grooves 382, 384 arranged on the first and second support 162, 164, in the vicinity of the outer surface of the support 162, 164 may have a width of between 10 mm and 20 mm, preferably around 15 mm.

According to a possible embodiment of the present invention, the connection element 166 may comprise two housings 54, 56 adapted to partially accommodate the first support 162 and the second support 164. In particular, the connection element 166 may be adapted to accommodate portions of the first and second support 162, 164 on which the connection grooves 382, 384 are arranged.

As can be seen in figure 8, each of the two housings 54, 56 comprises two supports 542, 544; 562, 564 between which the first and second supports 162, 164 can be inserted. According to a possible embodiment of the present invention, the coupling between housing 54, 56 and first and second support 162, 164 is a shape coupling which prevents relative movement between the two elements in a transverse plane. The coupling between housing 54, 56 and support 162, 164 can take place by inserting the latter between the supports 542, 544; 562, 564 according to a longitudinal direction.

As can be seen in figure 8, according to a possible embodiment, considering a transverse plane, the supports 542, 544; 562, 564 can be opened, but such that their inner surfaces converge with each other to prevent the respective support 162, 164 from slipping off in a direction lying in the transverse plane.

According to a possible embodiment, the connection element 166, in a position between the holes 522, 524 may be provided with a fastening hole 58, adapted to be engaged by a fastening screw 60 for fastening the connection element 166 and therefore the chain guide 12 to the conveyor structure.

According to a possible embodiment, in a chain guide 12 the connection elements 166 may be arranged at a distance from each other between 200 mm and 500 mm.

According to a possible embodiment, the chain guide 12 may comprise at least one lateral cap 46 adapted to prevent the axial sliding of the sliding element 18, 20 with respect to the seat 26, 28. The lateral cap 46 may be made by means of a shaped sheet fixed to the support structure 16 according to a substantially transverse position.

In the embodiment shown in figure 6, the lateral cap 46 may comprise two distinct elements 462, 464, each of which is provided with a hole that can be engaged by screws 466, 468 which screw on fastening seats 48, 50 arranged on the first sliding element 18 and on the second sliding element 20.

According to a possible embodiment of the present invention, the two elements 462, 464 of the lateral cap 46 can comprise two feet 469, 471 and 473, 475, which in use are suitable for resting on the support structure of the conveyor to prevent the rotation of the two elements 462, 464 about the screwing axis of the respective screw 466, 468.

In a further embodiment, the two elements 462, 464 of the lateral cap 46 can be joined together with a fitting 467 and be provided with two feet 469, 473 to prevent the rotation of the two elements 462, 464 around the screwing axis of the respective screw 466, 468.

With reference to figure 8, connection groove 382, 384 and fixing seat 48, 50 can be made with a single shaped slot having longitudinal extension. According to a possible embodiment, the shaped slot may comprise a lightening hole 49, 51.

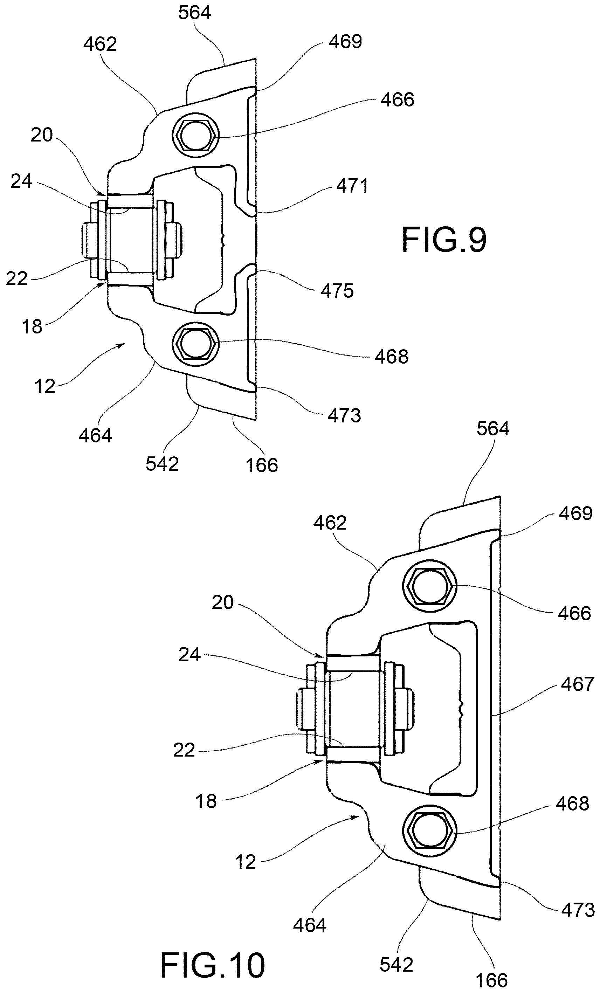

Figure 9 shows an enlargement of a possible embodiment of the coupling between the sliding element 18 and the seat 26. It is clear that the same features that will be described can also be applied to the coupling between the sliding element 20 and the seat 28.

As previously mentioned, the seat 26, 28 is adapted to accommodate a portion 19, 21 of the sliding element 18 so as to establish a shape coupling adapted to prevent relative movement according to directions belonging to a transverse plane.

The seat 26, 28 comprises an opening with a narrowing 62. The narrowing 62 is defined by at least one flap 64, 66 partially closing the opening of the seat 26, 28. In the embodiment shown in figure 9, the narrowing 62 is defined by two flaps 64, 66 which partially close the opening of the seat 26, 28.

The portion 19 of the sliding element 18, 20 which is received can be in the form of a seat 26, 28.

In particular, it may have an end adapted to fill the seat 26, with a tapered portion 68 adapted to couple with the narrowing 62 of the seat 26, 28.

In alternative embodiments, which are not part of the present invention, the coupling between seat 26, 28 can be made in another way, for example with fixing screws, interlocking, etc.

The sliding element 18, 20 comprises a sliding surface 22, 24 and two lateral sliding surfaces 222, 224; 242, 244 located on the sides of the sliding surfaces 22, 24. The lateral sliding surfaces 222, 224; 242, 244 have a position substantially perpendicular to the position of the sliding surface 22, 24.

In use, the lateral sliding surfaces 222, 224; 242, 244 are suitable for allowing the inner portions of the chain plates to slide on them.

According to a possible embodiment of the present invention, shown in the accompanying figures, the sliding element 18, 20 protrudes from the respective support 16; 162, 164 with a portion having substantially rectangular cross section. According to alternative embodiments, the protruding portion of the sliding element 18, 20 from the respective support 16; 162, 164 can have a different shape, for example rounded.

The sliding element 18, 20 is made of polymeric material.

The polymeric material with which the sliding element 18, 20 can be made can be for example: high density polyethylene (for example Polizene^{®}), Teflon^{®}, or acetal resin. However, it is possible to use different types of materials, for example those used in the chain guides of the prior art.

The polymeric material can be of the charged type, with elements of different types depending on the uses.

Further materials that can be used are for example Pa 6 (Nylon) or PTFE.

The advantages that can be achieved with a chain guide 12 according to the present invention are now apparent.

First of all, the chain guide 12 allows a more efficient cleaning, since the part in polymeric material connecting the two sliding elements has been eliminated.

According to a possible embodiment, the chain guide can be shaped to guarantee an optimal downward flow of the washing liquid. For example, the outer surface of the upper support can be inclined downwards, like the inner surface of the lower support.

Furthermore, the replacement of the worn part is a less expensive activity with respect to the chain guides of the prior art, since it is limited to the replacement of two elements made with much less material than the chain guides of the prior art.

For example, the chain guide of the prior art made entirely of polymeric material, can have a weight of up to about 2000 grams per meter, while with the same sliding surface, with the present invention it is possible to use about 120 grams per meter of material polymeric.

Therefore, in the event of having to replace the worn polymeric material part, the saving of material that occurs with the chain guide of the present invention is evident.

Furthermore, the chain guide allows a more efficient cleaning than the chain guides of the prior art, together with a lower cost linked to the wear of the parts contacted with the chain, especially with reference to the embodiment of figures 5-8, in which the support structure comprises two distinct supports. In fact in this case, the chain guide allows better cleaning with respect to the chain guides of the prior art, since there is no continuous connection between the two supports where dirt can accumulate.

Furthermore, since the quantity of material to be used for the sliding elements is smaller, it is possible to use more sophisticated types of polymer which normally have a higher cost than the polymers generally used.

Furthermore, the positioning on the conveyor structure is stable and long-lasting, since it is guaranteed by a structure comprising essentially metal.

## Claims

1. Chain guide (12) for a chain (14) comprising a support structure (16), a first sliding element (18) and a second sliding element (20), said first and second sliding elements (18, 20) each comprising at least one sliding surface (22, 24), said sliding surfaces (22, 24) facing each other;
said sliding elements (18,20) being made of polymeric material;
said support structure (16) comprising a first seat (26) for said first sliding element (18) and a second seat (28) for said second sliding element (20);
said first and second seats (26, 28) being adapted to establish a shaped coupling with a coupling portion (19, 21) of said first and second sliding elements (18, 20), respectively;
said shaped coupling being adapted to prevent relative movement in directions on a transverse plane to said chain guide (12) between said first and second seats (26, 28) and the respective first and second sliding elements (18, 20);
wherein the sliding elements (18, 20) comprise a sliding surface (22, 24) and two lateral sliding surfaces (222, 224; 242, 244) placed at the sides of the sliding surfaces (22, 24), said lateral sliding surfaces (222, 224; 242, 244) having a lying plane substantially perpendicular to the lying plane of the sliding surface (22, 24); and
wherein the seat (26, 28) comprises an opening (26, 28) ; **characterized in that** the opening (26, 28) has a narrowing (62) defined by at least one flap (64, 66) partially closing the seat opening (26, 28).

2. Chain guide (12) according to the preceding claim, **characterized in that** the sliding surfaces (22, 24) of said first and second sliding elements (18, 20) are parallel to each other.

3. Chain guide (12) according to any one of the preceding claims, **characterized in that** said support structure (16) is made by means of an element having a substantially C-shaped cross section.

4. Chain guide (12) according to any one of the preceding claims, **characterized in that** the support structure (16) is a metal profile having a box-type transverse cross-section, from which, at one side (30), two wings (32, 34) protrude on which said first seat (26) and said second seat (28) are provided.

5. Chain guide (12) according to the preceding claim, **characterized in that** the support structure (16) comprises a fastening side (36), opposite the side from which the wings protrude (32, 34), on which fastening means (38) to a cup conveyor structure are provided, said fastening means (38) being a fastening groove (38), having a substantially longitudinal extension, provided with inner walls (40, 42) comprising at least one prominence (44), protruding towards the inside of the fastening groove (38) and having a longitudinal extension.

6. Chain guide (12) according to claim 5, **characterised in that** the box-type support structure (16) provided with wings (32, 34) and the fastening groove (38), is made directly by extrusion, of aluminium or aluminium alloy.

7. Chain guide (12) according to claim 1, **characterized in that** the support structure (16) comprises a first support (162) and a second support (164) and at least one connection element (166), on said first support (162) the first seat (26) for the first sliding element (18) is provided, and on the second support (164) the second seat (28) for the second sliding element (20) is provided.

8. Chain guide (12) according to claim 7, **characterized in that** the first and second supports (162, 164) are provided with connection means to the coupling element (166), said connection means comprising connection grooves (382, 384) having a substantially longitudinal extension, said connection grooves (382, 384) comprising internal walls (402, 422; 404, 424) provided with at least one prominence (442, 444), protruding towards the inside of the connection groove (382, 384).

9. Chain guide (12) according to claim 8, **characterized in that** the first support (162) and the second support (164) with the respective connection grooves (382, 384) are made directly by extrusion, in aluminium or an alloy thereof.

10. Chain guide (12) according to any one of the claims 8-9, **characterized in that** the connection element (166) is provided with holes (522, 524) adapted to the passage of a connection screw (52), adapted to couple with said connection grooves (382, 384), to block the first support (162) and the second support (164) to the at least one connection element (166).

11. Chain guide (12) according to any one of the claims 7-10, **characterized in that** the connection element (166) comprises two housings (54, 56) adapted to partially accommodate the first support (162) and the second support (164), each of the two housings (54, 56) comprising two supports (542, 544; 562, 564) between which the first and second supports (162, 164) can be inserted, said coupling between the housings (54, 56) and the first and second support (162, 164) being a shaped coupling which prevents relative movement on a transverse plane.

12. Chain guide (12) according to the preceding claim, **characterized in that** the portion (19) of sliding element (18, 20) housed is counter-shaped with respect to the seat (26, 28).

13. Chain guide (12) according to any of the preceding claims, **characterized in that** the sliding element (18, 20) is made of polymeric material selected from the group comprising high density polyethylene, Teflon^{®}, acetal resin.

14. Cup conveyor comprising a chain guide (12) according to any of the claims from 1 to 13.

## Patentansprüche

1. Kettenführung (12) für eine Kette (14), umfassend eine Trägerstruktur (16), ein erstes Gleitelement (18) und ein zweites Gleitelement (20), wobei das erste und das zweite Gleitelement (18, 20) jeweils mindestens eine Gleitfläche (22, 24) umfassen, wobei die Gleitflächen (22, 24) einander zugewandt sind;
wobei die Gleitelemente (18, 20) aus einem polymeren Material bestehen;
wobei die Trägerstruktur (16) eine erste Aufnahme (26) für das erste Gleitelement (18) und eine zweite Aufnahme (28) für das zweite Gleitelement (20) umfasst;
wobei die erste und die zweite Aufnahme (26, 28) jeweils geeignet sind, eine formschlüssige Verbindung mit einem Kupplungsteil (19, 21) des ersten und des zweiten Gleitelements (18, 20) herzustellen;
wobei die formschlüssige Verbindung geeignet ist, eine Relativbewegung in Richtungen in einer zur Kettenführung (12) quer verlaufenden Ebene zwischen der ersten und der zweiten Aufnahme (26, 28) und den jeweiligen ersten und zweiten Gleitelementen (18, 20) zu verhindern;
wobei die Gleitelemente (18, 20) eine Gleitfläche (22, 24) sowie zwei seitliche Gleitflächen (222, 224; 242, 244) umfassen, die sich an den Seiten der Gleitflächen (22, 24) befinden, wobei die seitlichen Gleitflächen (222, 224; 242, 244) eine Liegeebene aufweisen, die im Wesentlichen zur Liegeebene der Gleitflächen (22, 24) ist; und
wobei die Aufnahme (26, 28) eine Öffnung (26, 28) umfasst; **dadurch gekennzeichnet, dass** die Öffnung (26, 28) eine Verengung (62) aufweist, die durch mindestens eine Lasche (64, 66) gebildet wird, welche die Öffnung der Aufnahme (26, 28) teilweise verschließt.

2. Kettenführung (12) nach dem vorhergehenden Anspruch, **dadurch gekennzeichnet, dass** die Gleitflächen (22, 24) des ersten und des zweiten Gleitelements (18, 20) zueinander parallel verlaufen.

3. Kettenführung (12) nach einem der vorhergehenden Ansprüche, **dadurch gekennzeichnet, dass** die Trägerstruktur (16) durch ein Element mit einem im Wesentlichen C-förmigen Querschnitt hergestellt ist.

4. Kettenführung (12) nach einem der vorhergehenden Ansprüche, **dadurch gekennzeichnet, dass** die Trägerstruktur (16) ein Metallprofil mit einem kastenförmigen Querschnitt ist, von dem an einer Seite (30) zwei Flügel (32, 34) hervorstehen, an denen die erste Aufnahme (26) und die zweite Aufnahme (28) vorgesehen sind.

5. Kettenführung (12) nach dem vorhergehenden Anspruch, **dadurch gekennzeichnet, dass** die Trägerstruktur (16) eine Befestigungsseite (36) gegenüber der Seite umfasst, von der die Flügel (32, 34) hervorstehen, auf der Befestigungsmittel (38) an einer Becherförderstruktur vorgesehen sind, wobei die Befestigungsmittel (38) eine Befestigungsnut (38) sind, die eine im Wesentlichen längsgerichtete Ausdehnung aufweist und mit Innenwänden (40, 42) versehen ist, die mindestens einen Vorsprung (44) umfassen, der in das Innere der Befestigungsnut (38) hineinragt und eine längsgerichtete Ausdehnung aufweist.

6. Kettenführung (12) nach Anspruch 5, **dadurch gekennzeichnet, dass** die mit den Flügeln (32, 34) und der Befestigungsnut (38) versehene kastenförmige Trägerstruktur (16) direkt durch Extrusion aus Aluminium oder einer Aluminiumlegierung hergestellt ist.

7. Kettenführung (12) nach Anspruch 1, **dadurch gekennzeichnet, dass** die Trägerstruktur (16) einen ersten Träger (162) und einen zweiten Träger (164) sowie mindestens ein Verbindungselement (166) umfasst, wobei an dem ersten Träger (162) die erste Aufnahme (26) für das erste Gleitelement (18) vorgesehen ist und an dem zweiten Träger (164) die zweite Aufnahme (28) für das zweite Gleitelement (20) vorgesehen ist.

8. Kettenführung (12) nach Anspruch 7, **dadurch gekennzeichnet, dass** der erste und der zweite Träger (162, 164) mit Verbindungsmitteln zum Kupplungselement (166) versehen sind, wobei die Verbindungsmittel Verbindungsnuten (382, 384) mit einer im Wesentlichen längsgerichteten Ausdehnung umfassen, wobei die Verbindungsnuten (382, 384) Innenwände (402, 422; 404, 424) umfassen, die mit mindestens einem Vorsprung (442, 444) versehen sind, der in das Innere der Verbindungsnut (382, 384) hineinragt.

9. Kettenführung (12) nach Anspruch 8, **dadurch gekennzeichnet, dass** der erste Träger (162) und der zweite Träger (164) mit den jeweiligen Verbindungsnuten (382, 384) direkt durch Extrusion aus Aluminium oder einer Legierung davon hergestellt sind.

10. Kettenführung (12) nach einem der Ansprüche 8-9, **dadurch gekennzeichnet, dass** das Verbindungselement (166) mit Bohrungen (522, 524) versehen ist, die für den Durchtritt einer Verbindungsschraube (52) geeignet sind, die mit den Verbindungsnuten (382, 384) gekoppelt werden kann, um den ersten Träger (162) und den zweiten Träger (164) mit mindestens einem Verbindungselement (166) zu verbinden.

11. Kettenführung (12) nach einem der Ansprüche 7-10, **dadurch gekennzeichnet, dass** das Verbindungselement (166) zwei Unterbringungen (54, 56) umfasst, die geeignet sind, den ersten Träger (162) und den zweiten Träger (164) teilweise aufzunehmen, wobei jede der beiden Unterbringungen (54, 56) zwei Halterungen (542, 544; 562, 564) umfasst, zwischen denen der erste und der zweite Träger (162, 164) eingesetzt werden können, wobei die Verbindung zwischen den Unterbringungen (54, 56) und dem ersten und dem zweiten Träger (162, 164) eine formschlüssige Verbindung ist, die eine Relativbewegung in einer Querebene verhindert.

12. Kettenführung (12) nach dem vorhergehenden Anspruch, **dadurch gekennzeichnet, dass** der aufgenommene Teil (19) des Gleitelements (18, 20) gegenförmig zur Aufnahme (26, 28) ausgebildet ist.

13. Kettenführung (12) nach einem der vorhergehenden Ansprüche, **dadurch gekennzeichnet, dass** das Gleitelement (18, 20) aus einem polymeren Material besteht, das aus der Gruppe ausgewählt ist, die hochdichtes Polyethylen, Teflon^{®} und Acetalharz umfasst.

14. Becherförderer, umfassend eine Kettenführung (12) nach einem der Ansprüche 1 bis 13.

## Revendications

1. Guide chaîne (12) pour une chaîne (14) comprenant une structure de support (16), un premier élément de glissement (18) et un second élément de glissement (20), lesdits premier et second éléments de glissement (18, 20) comprenant chacun au moins une surface de glissement (22, 24), lesdites surfaces de glissement (22, 24) étant orientées l'une vers l'autre ;
lesdits éléments de glissement (18, 20) étant réalisés en matériau polymère ;
ladite structure de support (16) comprenant un premier logement (26) pour ledit premier élément de glissement (18) et un second logement (28) pour ledit second élément de glissement (20) ;
lesdits premier et second logements (26, 28) étant adaptés à établir un accouplement conformé avec une portion d'accouplement (19, 21) desdits premier et second éléments de glissement (18, 20), respectivement ;
ledit accouplement conformé étant adapté à empêcher un mouvement relatif dans des directions sur un plan transversal audite guide chaîne (12) entre lesdits premier et second logements (26, 28) et lesdits premier et second éléments de glissement (18, 20) respectifs ;
dans lequel les éléments de glissement (18, 20) comprennent une surface de glissement (22, 24) et deux surfaces de glissement latérales (222, 224 ; 242, 244) disposées de part et d'autre des surfaces de glissement (22, 24), lesdites surfaces de glissement latérales (222, 224 ; 242, 244) ayant un plan de disposition sensiblement perpendiculaire au plan de disposition des surfaces de glissement (22, 24) ; et
dans lequel le logement (26, 28) comprend une ouverture (26, 28) ; **caractérisé en ce que** l'ouverture (26, 28) présente un rétrécissement (62) défini par au moins un volet (64, 66) fermant partiellement l'ouverture du logement (26, 28).

2. Guide chaîne (12) selon la revendication précédente, **caractérisé en ce que** les surfaces de glissement (22, 24) desdits premier et second éléments de glissement (18, 20) sont parallèles entre elles.

3. Guide chaîne (12) selon l'une quelconque des revendications précédentes, **caractérisé en ce que** ladite structure de support (16) est réalisée au moyen d'un élément ayant une section transversale sensiblement en forme de C.

4. Guide chaîne (12) selon l'une quelconque des revendications précédentes, **caractérisé en ce que** la structure de support (16) est un profilé métallique ayant une section transversale de type caisson, à partir de laquelle, sur un côté (30), deux ailes (32, 34) font saillie, sur lesquelles sont formés ledit premier logement (26) et ledit second logement (28).

5. Guide chaîne (12) selon la revendication précédente, **caractérisé en ce que** la structure de support (16) comprend un côté de fixation (36), opposé au côté à partir duquel les ailes (32, 34) font saillie, sur lequel sont prévus des moyens de fixation (38) à une structure de convoyeur à godets, lesdits moyens de fixation (38) étant une rainure de fixation (38), ayant une extension sensiblement longitudinale, pourvue de parois internes (40, 42) comprenant au moins une saillie (44) faisant saillie vers l'intérieur de la rainure de fixation (38) et présentant une extension longitudinale.

6. Guide chaîne (12) selon la revendication 5, **caractérisé en ce que** la structure de support de type caisson (16), pourvue des ailes (32, 34) et de la rainure de fixation (38), est réalisée directement par extrusion, en aluminium ou alliage d'aluminium.

7. Guide chaîne (12) selon la revendication 1, **caractérisé en ce que** la structure de support (16) comprend un premier support (162) et un second support (164) et au moins un élément de liaison (166), sur ledit premier support (162) étant prévu le premier logement (26) pour le premier élément de glissement (18), et sur le second support (164) étant prévu le second logement (28) pour le second élément de glissement (20).

8. Guide chaîne (12) selon la revendication 7, **caractérisé en ce que** lesdits premier et second supports (162, 164) sont pourvus de moyens de liaison à l'élément de couplage (166), lesdits moyens de liaison comprenant des rainures de liaison (382, 384) ayant une extension sensiblement longitudinale, lesdites rainures de liaison (382, 384) comprenant des parois internes (402, 422 ; 404, 424) pourvues d'au moins une saillie (442, 444) faisant saillie vers l'intérieur de la rainure de liaison (382, 384).

9. Guide chaîne (12) selon la revendication 8, **caractérisé en ce que** le premier support (162) et le second support (164) avec les rainures de liaison respectives (382, 384) sont réalisés directement par extrusion, en aluminium ou en un alliage de celui-ci.

10. Guide chaîne (12) selon l'une quelconque des revendications 8-9, **caractérisé en ce que** l'élément de liaison (166) est pourvu de trous (522, 524) adaptés au passage d'une vis de liaison (52), adaptée à établir un accouplement avec lesdites rainures de liaison (382, 384), pour bloquer le premier support (162) et le second support (164) au moins à un élément de liaison (166).

11. Guide chaîne (12) selon l'une quelconque des revendications 7-10, **caractérisé en ce que** l'élément de liaison (166) comprend deux logements (54, 56) adaptés à accueillir partiellement le premier support (162) et le second support (164), chacun des deux logements (54, 56) comprenant deux supports (542, 544 ; 562, 564) entre lesquels lesdits premier et second supports (162, 164) peuvent être insérés, ledit accouplement entre les logements (54, 56) et lesdits premier et second supports (162, 164) étant un accouplement conformé empêchant un mouvement relatif sur un plan transversal.

12. Guide chaîne (12) selon la revendication précédente, **caractérisé en ce que** la portion (19) de l'élément de glissement (18, 20) logée est contre-formée par rapport au logement (26, 28).

13. Guide chaîne (12) selon l'une quelconque des revendications précédentes, **caractérisé en ce que** l'élément de glissement (18, 20) est réalisé en matériau polymère choisi dans le groupe comprenant le polyéthylène haute densité, le Teflon^{®}, la résine acétalique.

14. Convoyeur à godets comprenant un guide chaîne (12) selon l'une quelconque des revendications 1 à 13.
